# EUROPÄISCHE PATENTANMELDUNG

(11) **EP 4 844 339 A1**
(43) Veröffentlichungstag der Anmeldung: **25.11.2026**
(21) Anmeldenummer: 26164033.8
(22) Anmeldetag: 11.03.2026
(51) Int. Cl.: G01B 21/04, G01B 11/02, G01B 11/24

(54) **VORRICHTUNG UND VERFAHREN ZUR MESSUNG EINES ANSCHLUSSMASSES BEI EINEM TEILKONFEKTIONIERTEN KABEL**

(30) Priorität: 20.05.2025 DE 102025119415
(71) Anmelder: MD ELEKTRONIK GmbH, 84478 Waldkraiburg (DE)
(72) Erfinder: Schuster, Udo, 83374 Traunwalchen (DE); Strauß, Benedikt, 83559 Mittergars (DE); Meltl, Alexander, 83547 Babensham (DE)

(57) **Zusammenfassung**

Die Erfindung betrifft eine Vorrichtung (1) zur Messung eines Anschlussmaßes t bei einem teilkonfektionierten Kabel (2), wobei das teilkonfektionierte Kabel (2) eine Messkante (3) sowie ein Innenleiter-Kontaktteil (4a, 4b) aufweist, wobei in einer Messstellung das Anschlussmaß t zwischen der Messkante (3) des Kabels (2) und der Spitze (5a, 5b) des Innenleiter-Kontaktteils (4a, 4b) in Längsrichtung (L) des Kabels (2) gemessen wird, wobei die Vorrichtung (1) zur Messung des Anschlussmaßes t einen Referenzkörper (6) mit einer Referenzfläche (7) aufweist, wobei die Referenzfläche (7) an die Messkante (3) des Kabels (2) anlegbar ist,
wobei der Referenzkörper (6) einen ersten Teilkörper (8) mit einer ersten Teilfläche (9) und einen zweiten Teilkörper (10) mit einer zweiten Teilfläche (11) aufweist,
wobei die Vorrichtung eine Stelleinheit aufweist, die ausgebildet ist, den ersten Teilkörper (8) und den zweiten Teilkörper (10) im Wesentlichen quer zu der Längsrichtung (L) des Kabels (2) so aufeinander zu zu führen, dass in der Messstellung die erste Teilfläche (9) und die zweite Teilfläche (11) eine im Wesentlichen durchgehende Fläche als Referenzfläche (7) ausbilden,
wobei die Vorrichtung eine insbesondere optische Messeinheit umfasst, die ausgebildet ist, den Abstand von der Referenzfläche (7) zu der Spitze (5a, 5b) des Innenleiter-Kontaktteils (4a, 4b) zu ermitteln.

Die Erfindung betrifft weiter ein Verfahren zur Messung eines Anschlussmaßes t bei einem teilkonfektionierten Kabel.

## Beschreibung

### Technisches Gebiet

Die Erfindung betrifft eine Vorrichtung und ein bevorzugt mittels der Vorrichtung durchführbares Verfahren, jeweils zur Messung eines Anschlussmaßes t bei einem teilkonfektionierten Kabel, wobei das teilkonfektionierte Kabel eine Messkante sowie ein Innenleiter-Kontaktteil aufweist, wobei das Anschlussmaß t zwischen der Messkante des Kabels und der Spitze des Innenleiter-Kontaktteils in Längsrichtung des Kabels gemessen wird.

### Stand der Technik

Aus Praxis der Konfektionierung von Kabeln, insbesondere der Kabel-Bearbeitung von ein- oder mehradrigen Datenkabeln ist es bekannt, den Mantel des Kabels nahe einem Ende des Datenkabels zu entfernen, so dass eine Abmantel-Kante gebildet wird. Das ein- oder mehradrige Datenkabel weist dabei mindestens einen Innenleiter, einen den Innenleiter umgebenden Isolator sowie einen den Isolator umgebenden Außenleiter auf, wobei der Außenleiter auch als Schirmgeflecht ausgebildet sein kann, und wobei das Schirmgeflecht den Isolator des mindestens einen Innenleiters umgibt. Ist der Mantel des Kabels an dem Ende des Kabels entfernt und die Abmantel-Kante ausgebildet, ist das Schirmgeflecht freigelegt und kann beispielsweise um die gebildete Abmantel-Kante umgelegt werden, so dass der umgelegte Abschnitt des Schirmgeflechts auf dem verbliebenen Endabschnitt des Mantels zu liegen kommt. Das Schirmgeflecht überdeckt dabei teilweise die Abmantel-Kante.

Aus Praxis der Konfektionierung von Kabeln, insbesondere von ein- oder mehradrigen Datenkabeln, ist es weiter bekannt, den von dem Isolator umgebenen Innenleiter an einem Ende freizulegen und an das freigelegte Ende des Innenleiters ein Innenleiter-Kontaktteil zu befestigen, beispielsweise mittels einer abschnittsweisen Vercrimpung des Innenleiter-Kontaktteils auf den freigelegten Endabschnitt des Innenleiters.

Bei einem derartig teilkonfektionierten Kabel, bei dem die ggf. von dem Schirmgeflecht überdeckte Abmantel-Kante ausgebildet und an den Innenleiter ein Innenleiter-Kontaktteil befestigt, insbesondere angecrimpt, ist, ist für die weitere Bearbeitung im Rahmen der Kabelkonfektionierung erforderlich, den Abstand zwischen der Spitze des Innenleiter-Kontaktteils und der ggf. von dem umgelegten Schirmgeflecht überdeckten Abmantel-Kante zu kennen, wobei die ggf. von dem umgelegten Schirmgeflecht überdeckte Abmantel-Kante eine Meßkante ausbildet, von der der Abstand zu der Spitze des Innenleiter-Kontaktteils gemessen wird. Dieser Abstand, als 'Anschlussmaß t' bezeichnet, ist in engen Toleranzen vorgegeben und muss bestimmt werden, um zu entscheiden, ob ein bestimmtes teilkonfektioniertes Kabel weiter bearbeitet werden kann oder von der weiteren Bearbeitung ausgenommen werden muss.

Um das Anschlussmaß t, also den Abstand von der Spitze des auf den Innenleiter des Kabels befestigten Innenleiter-Kontaktteils zu der ggf. von dem Schirmgeflecht überdeckten Abmantel-Kante, die für diese Messung eine Messkante des Kabels bereitstellt, bestimmen zu können, ist es bekannt, einen Referenzkörper bereitzustellen, der eine ebene Referenzfläche ausbildet, wobei die ggf. von dem Schirmgeflecht überdeckte Abmantel-Kante an die Referenzfläche des Referenzkörpers angelegt wird, und wobei das Anschlussmaß t zwischen der Referenzfläche des Referenzkörpers und der Spitze des Innenleiter-Kontaktteils gemessen wird. Der Referenzkörper mit der Referenzfläche kann dabei mit einer definierten, vorgegebenen Andrückkraft an die ggf. von dem Schirmgeflecht überdeckte Abmantel-Kante gedrückt werden, während der Abstand von der Referenzfläche des Referenzkörpers zu der Spitze des Innenleiter-Kontaktteils gemessen wird, um eine ungleichmäßige Überdeckung der Abmantel-Kante durch den diese überdeckenden Abschnitt des Schirmgeflechts ausgleichen zu können und um eine definierte Referenzfläche für die Messung des Abstands zu der Spitze des Innenleiter-Kontaktteils auszubilden.

Aus der Praxis der Kabelkonfektionierung ist es weiter bekannt, bei einem Datenkabel mit zwei oder mehr Innenleitern innerhalb eines gemeinsamen Mantels den Mantel endnah abzumanteln und an jeden der zwei oder mehr Innenleiter je ein Innenleiter-Kontaktteil anzubringen. Dann ist das Anschlussmaß t zwischen der ggf. von dem umgelegten Schirmgeflecht überdeckten Abmantel-Kante zu der Spitze eines jeden der zwei oder mehr Innenleiter-Kontaktteile zu bestimmen und zu messen. Eine solche Messung für jedes der Innenleiter-Kontaktteile nacheinander durchzuführen kann zeitaufwendig sein, insbesondere in Hinblick auf eine kurze Taktzeit von einigen Sekunden, mit der eine automatisierte Kabel-Konfektionieranlage betrieben wird.

EP 4 067 810 A1 beschreibt eine Vorrichtung zur Erfassung des Anschlussmaßes t bei einem teilkonfektionierten Kabel, wobei die Vorrichtung eine Messhülse sowie eine Kamera umfasst. Die Messhülse weist an einem ersten Ende eine Einführöffnung und an einem zweiten Ende eine Bohrung auf, wobei das teilkonfektionierte Kabel durch die Einführöffnung in die Messhülse so weit eingeführt wird, bis der Innenleiter-Kontakt durch eine Bohrung an dem zweiten Ende der Messhülse treten kann. Dabei liegt die Messkante des Kabels an einer die Bohrung umlaufenden Wandung an. Angrenzend an das zweite Ende der Messhülse mit der Bohrung weist der Mantel der Messhülse eine Aussparung auf, so dass ein Sichtfenster für die Kamera ausgebildet ist, derart, dass die Kamera die an der Wandung anliegende Messkante des Kabels sowie die Spitze des Innenleiter-Kontakts erfassen und ausmessen kann. Für die Durchführung eines Verfahrens zur Erfassung des Anschlussmaßes t unter Verwendung dieser Messhülse ist es erforderlich, das teilkonfektionierte Kabel in die Messhülse einzufädeln und so zu platzieren, dass die Messkante an der die Bohrung umgebenden Wandung anliegt.

WO 2020/094707 A1 beschreibt eine Vorrichtung zur Erfassung des Anschlussmaßes t bei einem teilkonfektionierten Kabel, wobei die Vorrichtung als Referenzkörper eine Messhülse mit einem ersten Ende und einem zweiten Ende sowie ein Erfassungsmittel, insbesondere einen Taster oder eine Kamera, bereitstellt. An dem ersten Ende der Messhülse ist eine Referenzkante für die Messkante des Kabels vorgesehen, so dass das an der Referenzkante anliegende Kabel mit dem Innenleiter-Kontaktteil die Messhülse durchsetzt. An oder nahe dem zweiten Ende der Messhülse wird die Spitze des Innenleiter-Kontaktteils optisch, beispielsweise mittels der Kamera, oder anders, beispielsweise mittels des Tasters, erfasst. Auch in diesem Fall ist es erforderlich, das Innenleiter-Kontaktteil in die Messhülse einzufädeln.

### Beschreibung der Erfindung

Es ist eine Aufgabe der Erfindung, eine Messung des Anschlussmaßes t bei einem teilkonfektionierten Kabel in kurzer Zeit prozesssicher, insbesondere auch für ein mehradriges Kabel, zu ermöglichen.

Diese Aufgabe wird für eine Vorrichtung zur Messung eines Anschlussmaßes t bei einem teilkonfektionierten Kabel, wobei das teilkonfektionierte Kabel eine Messkante sowie ein Innenleiter-Kontaktteil aufweist, wobei in einer Messstellung das Anschlussmaß t zwischen der Messkante des Kabels und der Spitze des Innenleiter-Kontaktteils in Längsrichtung des Kabels gemessen wird, wobei die Vorrichtung zur Messung des Anschlussmaßes t einen Referenzkörper mit einer Referenzfläche aufweist, wobei die Referenzfläche an die Messkante des Kabels anlegbar ist, erfindungsgemäß im Wesentlichen mit den Merkmalen gelöst:
- dass der Referenzkörper einen ersten Teilkörper mit einer ersten Teilfläche und einen zweiten Teilkörper mit einer zweiten Teilfläche aufweist,
- dass die Vorrichtung eine Stelleinheit aufweist, die ausgebildet ist, den ersten Teilkörper und den zweiten Teilkörper im Wesentlichen quer zu der Längsrichtung des Kabels so aufeinander zu zuführen, dass in der Messstellung die erste Teilfläche und die zweite Teilfläche eine im Wesentlichen durchgehende Fläche als Referenzfläche ausbilden, und
- dass die Vorrichtung eine, insbesondere optische, Messeinheit umfasst, die ausgebildet ist, den Abstand von der Referenzfläche zu der Spitze des Innenleiter-Kontaktteils zu ermitteln.

Die Aufgabe wird weiter durch ein bevorzugt unter Verwendung der erfindungsgemäßen Vorrichtung durchführbares Verfahren zur Messung des Anschlussmaßes t bei dem teilkonfektionierten Kabel, wobei das teilkonfektionierte Kabel eine Messkante sowie ein Innenleiter-Kontaktteil aufweist, wobei in einer Messstellung das Anschlussmaß t zwischen der Messkante des Kabels und der Spitze des Innenleiter-Kontaktteils in Längsrichtung des Kabels gemessen wird, gelöst, wobei das Verfahren die Schritte umfasst:
- Bereitstellen des teilkonfektionierten Kabels mit der Messkante in einer Messvorrichtung, insbesondere in einer Vorrichtung nach Anspruch 1, mit einem Referenzkörper und einer Referenzfläche,
- Ausbilden des Referenzköpers durch ein Verschieben eines ersten Teilkörpers mit einer ersten Teilfläche und eines zweiten Teilkörpers mit einer zweiten Teilfläche derart, dass die beiden Teilflächen der Teilkörper eine im Wesentlichen durchgehende Fläche als Referenzfläche ausbilden,
- Verschieben der Referenzfläche und der Messkante relativ zueinander derart, dass in der Messstellung die Referenzfläche an der Messkante anliegt,
- Aufnehmen eines Bildes, das die Referenzfläche und die Spitze des Innenleiter-Kontaktteils enthält, und
- Ermitteln des Anschlussmaßes t aus dem Bild durch eine Bildauswertung.

Die Ausbildung des Referenzkörpers durch zwei Teilkörper, die in der Messstellung die Referenzfläche ausbilden, bietet den Vorteil, den Innenleiter-Kontakt nicht mehr durch eine Hülse durchfädeln zu müssen, um das Anschlussmaß t erfassen zu können. Das erweist sich insbesondere dann als vorteilhaft, wenn das Kabel zwei oder mehr Innenleiter-Kontaktteile aufweist, die in einem Schritt ausgemessen werden können und nicht mehr jeweils einzeln durch eine Messhülse gefädelt werden müssen.

Die Teilkörper können als flache Zuschnitte ausgebildet sein, die synchronisiert sehr schnell in eine Messstellung gebracht werden können; weiter können die flachen Zuschnitte eine Kontur aufweisen, die auf das zu vermessende Kabel im Bereich der Außenleiter-Hülse angepasst ist.

Vorzugsweise ist hinsichtlich der Vorrichtung vorgesehen, dass die Stelleinheit als Greifereinheit mit zwei Greiferarmen ausgebildet ist, wobei die Stelleinheit eine Steuereinheit aufweist, die die Greiferarme synchronisiert in die Messstellung verschwenken, und wobei an jedem der Greiferarme einer der Teilkörper angeordnet ist. Die von der Steuereinheit gesteuerte Verschwenkung der Greiferarme kann um einen geringer Winkel von einigen Grad erfolgen, so dass die beiden Greiferarme und damit die beiden Teilkörper im Wesentlichen annähernd linear, insbesondere annähernd radial, seitlich an das Kabel herangeführt werden. Die Stellbewegung lässt sich leicht steuern und ist schnell, also zeitsparend, auszuführen.

Bevorzugt ist in Bezug auf den jeweiligen Greiferarm der Stelleinheit vorgesehen, dass an dem jeweiligen Greiferarm je eine lineare Stellvorrichtung, insbesondere eine Zylindereinheit mit einem verschieblichen Kolben, angeordnet ist, wobei der jeweilige Teilkörper an einem Ende des Kolbens angeordnet ist. Durch eine Betätigung der jeweiligen linearen Stellvorrichtung, insbesondere der jeweiligen Zylindereinheit, lässt sich der an dem jeweiligen Greiferarm angeordnete Teilkörper, durch eine synchronisierte Betätigung beider Zylindereinheiten lassen sich insbesondere beide Teilkörper, in die Messstellung, also in Anlage an die Messkante des Kabels, bringen bzw. aus der Messstellung herausführen. Die lineare Stellvorrichtung kann beispielsweise als Linearmotor oder, in der Ausgestaltung als Zylindereinheit mit einem verschieblichen Kolben, als pneumatische oder hydraulische Zylindereinheit ausgebildet sein.

Bevorzugt ist hinsichtlich der linearen Stellvorrichtung, insbesondere hinsichtlich der Zylindereinheit, an dem jeweiligen Greiferarm vorgesehen, dass der jeweilige verschiebliche Kolben im Wesentlichen parallel zu der Längsrichtung des Kabels angeordnet ist, wobei der jeweilige Teilkörper quer zu der Längsrichtung des Zylinders an einem radial zu der Längsrichtung des Kabels weisenden Ausleger angeordnet ist. Aufgrund der Ausrichtung der Kolben parallel zu der Längsrichtung des Kabels, lässt sich durch ein Verschieben des Kolbens in der Messstellung eine definierte Anpresskraft auf die Messkante des Kabels ausüben. **In** einer Ausbildung der linearen Stellvorrichtung durch einen Linearmotor ist beispielsweise vorgesehen, dass die Ausgangswelle des Linearmotors in einer Richtung parallel zu der Längsrichtung des Kabels linear ein- und ausfahrbar ausgebildet.

**In** Bezug auf den Ausleger ist vorzugsweise vorgesehen, dass der Ausleger an einem ersten Ende an dem Kolben des Zylinders befestigt ist und wobei der Ausleger an einem zweiten Ende eine Kontur aufweist, die komplementär zu einem an die Messkante des angrenzenden Abschnitts des Kabels ausgebildet ist. Durch ein einfaches Austauschen des jeweiligen Auslegers lässt sich der jeweilige Teilkörper an eine äußere Geometrie des zu messenden Kabels, angrenzend an die Messkante des Kabels im Bereich des abgemantelten Abschnitts des Kabels, abstimmen.

Weiter ist bevorzugt in Bezug auf die Stelleinheit mit den schwenkbaren Greiferarmen vorgesehen, dass die Schwenkachse im Wesentlichen parallel zu einer Längsrichtung des Kabels angeordnet ist.

Für die Vorrichtung ist weiter bevorzugt vorgesehen, dass die optische Messeinheit eine Bildaufnahmeeinheit und eine Beleuchtungseinheit aufweist, wobei die Bildaufnahmeeinheit im Auflicht oder im Gegenlicht ein Bild aufnimmt, wobei die Messeinheit weiter eine Bildauswerteeinheit aufweist, wobei die Bildauswerteeinheit aus dem Bild das Anschlussmaß t ermittelt.

Weiter ist für die Vorrichtung vorzugsweise vorgesehen, dass an einem der Teilkörper eine Maßverkörperung vorgesehen ist, wobei die Maßverkörperung insbesondere als von der Referenzfläche fort weisender Vorsprung mit definierter Erstreckung in Längsrichtung des Kabels ausgebildet ist. Die Maßverkörperung kann beispielsweise als zylindrischer Vorsprung ausgebildet sein, der im Auflicht oder im Gegenlicht eine definierte Erstreckung quer oder längs der Längserstreckung des Kabels aufweist und dessen Erstreckung von der Bildauswerteeinheit als Grundlage für die Bestimmung des Abstandsmaßes in Millimetern dient.

Eine bevorzugte Durchführung des Verfahrens sieht vor, den Schritt "Verschieben der Referenzfläche und der Messkante relativ zueinander derart, dass in der Messstellung die Referenzfläche an der Messkante anliegt" in der Weise durchzuführen, dass die Referenzfläche an der Messkante mit einer vorgegebenen Kraft anliegt. Für diese bevorzugte Durchführung werden die Zylindereinheiten synchronisiert so angesteuert, dass die Teilkörper mit der vorgegebenen Kraft an der Messkante des Kabels anliegen.

Alternativ oder ergänzend ist bei einer bevorzugten Durchführung des Verfahrens vorgesehen, den Schritt "Ausbilden des Referenzköpers durch ein Verschieben eines ersten Teilkörpers mit einer ersten Teilfläche und eines zweiten Teilkörpers mit einer zweiten Teilfläche derart, dass die beiden Teilflächen der Teilkörper eine im Wesentlichen durchgehende Fläche als Referenzfläche ausbilden" so durchzuführen, dass die beiden Teilkörper radial aufeinander zu bewegt werden, insbesondere aufeinander zu geschwenkt werden, um die Referenzfläche auszubilden. Dieses radiale Aufeinanderzubewegen der Teilkörper kann durch ein Aufeinanderzuschwenken der Teilkörper um einen nur geringen Schwenkwinkel von einigen Grad erfolgen.

Weitere Vorteile und Merkmale der Erfindung ergeben sich aus den abhängigen Ansprüchen sowie aus der nachfolgenden Beschreibung mindestens eines Ausführungsbeispiels.

Die Erfindung wird im Folgenden unter Bezugnahme auf die anliegenden Zeichnungen näher beschrieben und erläutert.
- Fig. 1: zeigt ausschnittsweise eine schematische Draufsicht auf ein Ausführungsbeispiel einer erfindungsgemäßen Vorrichtung zur Erfassung eines Anschlussmaßes t bei einem teilkonfektionierten Kabel, während einer beispielhaften Durchführung des erfindungsgemäßen Verfahrens,
- Fig 1a: zeigt einen Ausschnitt aus Fig. 1, wobei zur Verdeutlichung der Vorrichtung und des Verfahrens einzelne Komponenten der Vorrichtung nicht dargestellt sind,
- Fig. 2: zeigt eine Vorderansicht der Vorrichtung aus Fig. 1 und Fig. 1a, und

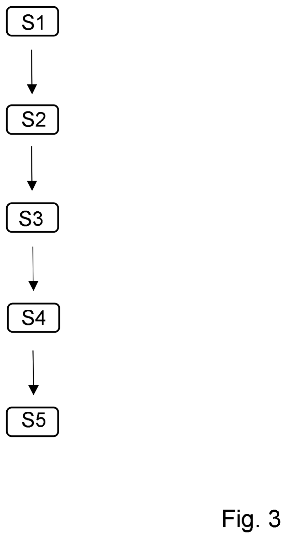

- Fig. 3: zeigt ein Flussdiagramm mit dem Ablauf einer beispielhaften Durchführung des erfindungsgemäßen Verfahrens unter Verwendung der in Fig. 1 dargestellten Vorrichtung.

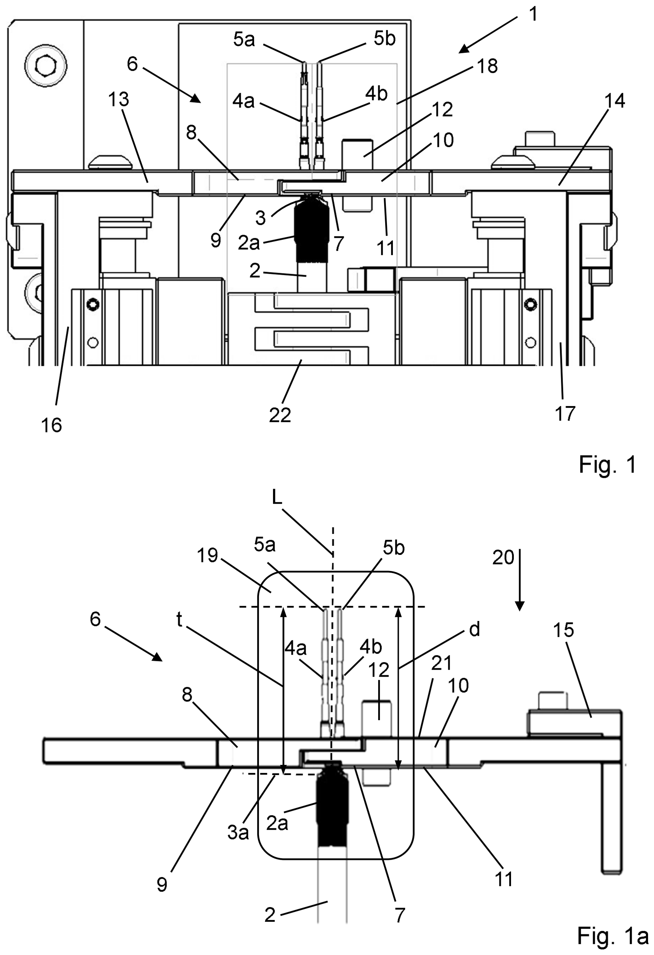

Fig. 1 zeigt eine Draufsicht auf ein nur ausschnittsweise dargestelltes Ausführungsbeispiel einer Vorrichtung 1 zur Erfassung eines Anschlussmaßes t bei einem teilkonfektionierten Kabel 2.

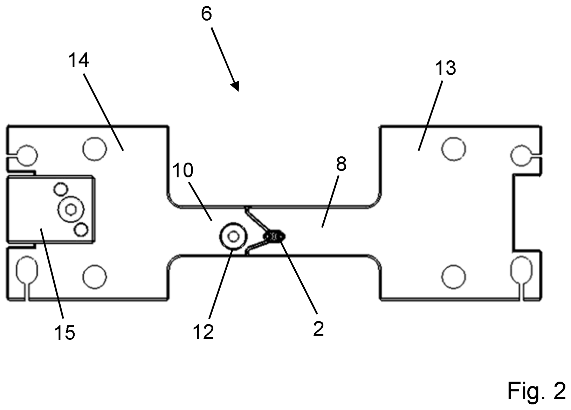

Die Vorrichtung 1 ist eine von mehreren Stationen einer modularen Anlage zur Kabelkonfektionierung, insbesondere zur Konfektionierung eines zweiadrigen Datenkabels mit einem Steckergehäuse. Das Kabel 2 wird in der Vorrichtung 1 in einem teilkonfektionierten Bearbeitungszustand bereitgestellt, in einem Zustand also, bei dem in einem vorherigen Bearbeitungsschritt an einem Ende des Kabels der Kabelmantel so weit entfernt worden ist, dass das den Isolator umgebende Schirmgeflecht freigelegt und nach dem Freilegen das Schirmgeflecht um ca. 180° zurück auf den verbliebenen Kabelmantel umgelegt wurde, derart, dass das umgelegte Schirmgeflecht 2a die durch das Entfernen des Kabelmantels gebildete Abmantel-Kante überdeckt. In einem weiteren vorherigen Bearbeitungsschritt war an jedem der beiden Innenleiter je ein Innenleiter-Kontaktteil 4a, 4b befestigt worden, beispielsweise mittels eines Crimpens des jeweiligen Innenleiter-Kontaktteils 4a, 4b auf jede der beiden Adern des Kabels 2. In diesem teilkonfektionierten Zustand ist das Kabel 2 in Fig. 1, 1a und Fig. 2 dargestellt.

Für die weitere Bearbeitung des teilkonfektionierten Kabels 2 ist es erforderlich, ein Anschlussmaß t, also einen Abstand (gemessen entlang einer Längserstreckung L des Kabels 2, Fig. 1a) zwischen einer Messkante 3 des Kabels 2 und einer Spitze 5a, 5b des jeweiligen Innenleiter-Kontaktteils 4a, 4b zu ermitteln und zu überprüfen, ob das für das jeweilige Innenleiter-Kontaktteil 4a bzw. 4b ermittelte Anschlussmaß t in einem engen Bereich vorgegebenen Fertigungsvorgaben entspricht. Das Anschlussmaß t wird dabei als Abstand, bezogen auf und gemessen parallel zu der Längsrichtung L des Kabels 2, von der Spitze 5a, 5b des Innenleiter-Kontaktteils 4a, 4b zu der Messkante 3 ermittelt, wobei die Messkante 3 des Kabels 2 die durch das umgelegte Schirmgeflecht 2a überdeckte Abmantel-Kante des Kabels 2 ist. Dabei bildet eine gedachte Verlängerung der Messkante 3 eine im Wesentlichen flache Messebene 3a (Fig. 1a) aus, die senkrecht zu der Längsrichtung L des Kabels 2 ausgerichtet ist und die als Bezugsebene für die Ermittlung des Anschlussmaßes t für die jeweilige Spitze 5a, 5b des Innenleiter-Kontaktteils 4a, 4b dient.

Für die Messung des Anschlussmaßes t ist vorgesehen, dass die Vorrichtung 1 einen Referenzkörper 6 aufweist, der eine Referenzfläche 7 bereitstellt, wobei die Referenzfläche 7 an die Messkante 3 des Kabels 2 anlegbar ist, so dass, wenn die Messkante 3 an der Referenzfläche 7 anliegt, das Anschlussmaß t zwischen der Referenzfläche 7 und der Spitze 5a, 5b des jeweiligen Innenleiter-Kontaktteils 4a, 4b, insbesondere optisch, erfassbar ist.

Der in Fig. 1 dargestellte Referenzkörper 6 ist zweiteilig ausgebildet und weist einen ersten Teilkörper 8 mit einer ersten Teilfläche 9 sowie einen zweiten Teilkörper 10 mit einer zweiten Teilfläche **11** auf. Die beiden Teilkörper 8, 10 sind getrennt voneinander ausgebildet und werden in einer Messstellung so aneinander angelegt, dass die beiden Teilflächen 9, **11** eine gemeinsame, durchgehende Fläche ausbilden, die als Referenzfläche 7 für die Messung des Anschlussmaßes t vorgesehen ist.

Die Vorrichtung weist weiter eine Stelleinheit auf, die ausgebildet ist, den ersten Teilkörper 8 mit der ersten Teilfläche 9 sowie den zweiten Teilkörper 10 mit der zweiten Teilfläche **11 im** Wesentlichen quer zu der Längsrichtung L des Kabels 2, also im Wesentlichen radial in Bezug auf die Längsrichtung L des Kabels 2, in eine Messstellung aufeinander zu zu führen, dass in der Messstellung die beiden Teilkörper 8, 10 so aneinander anliegen, dass die Teilflächen 9, **11** die im Wesentlichen durchgehende Fläche als Referenzfläche 7 ausbilden.

Um die beiden Teilkörper 8, 10 aufeinander zu zu führen, weist die Vorrichtung 1 weiter eine Stelleinheit auf, wobei die Stelleinheit ausgebildet ist, den ersten Teilkörper 8 und den zweiten Teilkörper 10 im Wesentlichen quer zu der Längsrichtung L des Kabels 2 aufeinander zu zu führen, und zwar ausgehend von einer Ausgangsstellung, in der die Teilkörper 8, 10 einen Abstand aufweisen, in die Messstellung, in der die Teilkörper 8, 10 aneinander anliegend die durchgehende gemeinsame Fläche als Referenzfläche 7 ausbilden.

**In** dem dargestellten Ausführungsbeispiel sind die Teilkörper 8, 10 zu beiden Seiten der Längsrichtung L des Kabels 2, einander gegenüberliegend, angeordnet und werden durch die Stelleinheit um jeweils den gleichen Betrag synchronisiert aus der Ausgangsstellung in die Messstellung zu der Längsrichtung L des Kabels 2 hin verschoben.

Die Stelleinheit ist insbesondere als Greifereinheit ausgebildet, wobei die Greifereinheit zwei Greiferarme aufweist, wobei die Stelleinheit eine Steuereinheit aufweist, die ausgebildet ist, die beiden Greiferarme synchronisiert in die Messstellung zu verschwenken. Dabei ist an jedem der beiden Greiferarme einer der beiden Teilkörper 8, 10 angeordnet. Die Greifereinheit ist insbesondere als Winkelparallelgreifer ausgebildet. Die Schwenkachse der Greifereinheit ist im Wesentlichen parallel zu der Längsrichtung L des Kabels 2, oberhalb und parallel zu der Papierebene der Darstellung von Fig. 1, angeordnet.

An jedem der beiden Greiferarme ist je eine lineare Stellvorrichtung angeordnet, wobei die lineare Stellvorrichtung ausgebildet ist, den jeweiligen Greiferarm in einer Richtung parallel zu der Längsrichtung L des Kabels 2 hin zu der Referenzfläche 7 in die Messstellung oder von der Referenzfläche 7 fort zu verschieben.

Die lineare Stellvorrichtung kann insbesondere als ein Linearmotor ausgebildet sein, dessen Abtriebswelle im Wesentlichen parallel zu der Längsrichtung L des Kabels 2 ausgebildet ist.

In dem in Fig. 1 und 1a dargestellten Ausführungsbeispiel ist die lineare Stellvorrichtung jeweils als Zylindereinheit mit einem längs verschieblichen Kolben 16, 17 ausgebildet, wobei der jeweilige Teilkörper 8, 10 an einem Ende des Kolbens 16, 17 angeordnet ist. Dabei ist in dem dargestellten Ausführungsbeispiel vorgesehen, dass der jeweilige Teilkörper 8, 10 an der linearen Stellvorrichtung, insbesondere dem ersten Ende des Kolbens 16, 17 der pneumatisch oder hydraulisch betriebenen Zylindereinheit, lösbar befestigt ist.

Der jeweils verschiebliche Kolben 16, 17 der jeweiligen Zylindereinheit ist im Wesentlichen parallel zu der Längsrichtung L des Kabels 2 bei Betätigung der Zylindereinheit verschieblich angeordnet. Der jeweilige Teilkörper 8, 10 ist quer zu der Längsrichtung des Kolbens 16, 17 der Zylindereinheit, auf die Längsrichtung L des Kabels 2 weisend, an einem radial zu der Längsrichtung L des Kabels 2 weisenden Ausleger 13, 14 angeordnet. Der Ausleger 13, 14 ist an dem ersten Ende des jeweiligen Kolbens lösbar befestigt, insbesondere auch, um die Ausleger 13, 14 austauschen zu können, um die Messung von Kabeln mit unterschiedlichen Durchmessern bzw. Umfangskonturen zu ermöglichen.

In dem in Fig. 1, 1a und 2 dargestellten Ausführungsbeispiel ist der Teilkörper 8, 10 jeweils als Endabschnitt des Auslegers 13, 14 ausgebildet, derart, dass der Ausleger 13, 14 mit einem Endabschnitt an der Messkante 3 des Kabels 2 anlegbar bzw. mit der Messebene 3a des Kabels 2 in Deckung bringbar ist. In einer alternativen Ausgestaltung könnte vorgesehen sein, dass der Teilkörper 8, 10 an dem jeweiligen Ausleger 13, 14 lösbar befestigt ist, wobei die Ausleger 13, 14 aufeinander zuweisend in Bezug auf die Längsrichtung L radial ausgerichtet sind.

In dem dargestellten Ausführungsbeispiel ist der Ausleger 13, 14 an einem ersten Ende an dem jeweiligen Ende des Kolbens 16, 17 des jeweiligen Zylinders lösbar befestigt. Insbesondere ist ein L-förmiges Koppelteil 15 vorgesehen, dessen einer Schenkel an dem Ausleger 14 und dessen anderer Schenkel an dem Kolben 17 befestigt ist, wie in Fig. 1a und Fig. 2 für einen der beiden Teilkörper, nämlich für den zweiten Teilkörper 10, dargestellt ist und auch für den anderen, ersten Teilkörper 8 vorgesehen sein kann.

An dem zweiten, auf den gegenüberliegenden Teilkörper weisende Ende weist der jeweilige Teilkörper bzw. Ausleger eine Kontur auf, wobei die Kontur komplementär zu einem Umfangsabschnitt eines an die Messkante 3 des angrenzenden Abschnitts des Kabels 2 ausgebildet ist.

Wie insbesondere aus der Draufsicht aus Fig. 2 erkennbar, in einer Blickrichtung an die beiden aneinander anliegenden Teilkörper 8, 10, weist das abgemantelte Kabel 2 angrenzend an die durch die beiden Teilkörper 8, 10 verdeckte Abmantel-Kante einen im Wesentlichen ovalen Umfang auf. Dabei ist aus Fig. 2 ersichtlich, dass das Kabel 2 als zweiadriges Kabel ausgebildet ist, wobei die beiden Adern des Kabels 2, in der Darstellung von Fig. 2, horizontal ausgerichtet zwischen den beiden Teilkörpern 8, 10 angeordnet sind.

Aus Fig. 2 ist erkennbar, dass der erste Teilkörper 8 an dem zweiten, auf den zweiten Teilkörper 10 weisenden Ende eine im Wesentlichen U-förmige Kontur aufweist, wobei die in der Darstellung von Fig. 2 rechte Ader an dem Boden des U und die in der Darstellung von Fig. 2 linke Ader zwischen den Schenkeln des U angeordnet ist. Es ist weiter erkennbar, dass der zweite Teilkörper 10 an seinem auf den ersten Teilkörper 8 weisenden zweiten Ende eine abschnittsweise kreisbogenförmige Kontur aufweist, wobei die Kontur die in der Darstellung von Fig. 2 linke Ader seitlich begrenzt, derartig, dass die U-förmige Kontur an dem zweiten Ende des ersten Teilkörpers 8 sowie die kreisbogenförmige Kontur an dem zweiten Ende des zweiten Teilkörpers 10 die beiden Adern des Kabels 2 in einer im Umriss im Wesentlichen ovalen Gesamt-Kontur aufnehmen, wobei die Gesamt-Kontur die Adern annähernd formschlüssig und umlaufend aufnehmen.

Die Vorrichtung 1 umfasst zusätzlich zu der Stelleinheit weiter eine Messeinheit, insbesondere eine optische Messeinheit, die ausgebildet ist, den Abstand der Referenzfläche 7, also den beiden in Draufsicht (Fig. 1, 1a) fluchtend miteinander ausgerichteten Teilflächen 9, **11** der beiden Referenzkörper 8, 10 zu der Spitze 5a, 5b des jeweilige Innenleiter-Kontaktteils 4a, 4b zu erfassen.

Die Messeinheit zur Erfassung des Abstandes der Referenzfläche 7 zu der Spitze 5a, 5b des jeweiligen Innenleiter-Kontaktteils 4a, 4b ist als optische Messeinheit ausgebildet und weist eine unterhalb der Papierebene der Darstellung von Fig. 1 und 1a angeordnete Beleuchtungseinheit sowie eine oberhalb der Papierebene der Darstellung von Fig. 1 und 1a angeordnete Bildaufnahmeeinheit auf, so dass die optische Messeinheit ausgebildet ist, ein Bild im Gegenlicht aufzunehmen. Weiter weist die Messeinheit eine Bildauswerteeinheit auf, wobei die Bildauswerteeinheit ausgebildet ist, beispielsweise mittels einer graphischen Bildauswertung aus dem aufgenommenen Bild das Anschlussmaß t zu ermitteln. Bei einem abgewandelten Ausführungsbeispiel kann vorgesehen sein, dass die Beleuchtungseinheit sowie die Bildaufnahmeeinheit auf der gleichen Seite, beispielsweise beide oberhalb der Papierebene der Darstellung von Fig. 1 und Fig. 1a, angeordnet sind, um ein Bild im Auflicht aufzunehmen.

Die in Fig. 1 und 1a dargestellte Beleuchtungseinheit ist ausgebildet, den Bereich zwischen den Spitzen 5a, 5b der Innenleiter-Kontaktteile 4a, 4b und den Teilkörpern 8, 10 im Wesentlichen homogen auszuleuchten; ein Umriss der flächigen Lichtquelle der Beleuchtungseinheit ist in Fig. 1 mit dem Bezugszeichen "18" ausgewiesen. Mit dem Bezugszeichen "19" ist in Fig. 1a der von der Bildaufnahmeeinheit erfasste Bereich ausgewiesen.

Die Bildauswerteeinheit ist ausgebildet, einen Abstand d zwischen der Referenzkante 7 und der jeweiligen Spitze 5a, 5b des Innenleiter-Kontaktteils 4a, 4b zu ermitteln. Wird durch ein Betätigen der Stelleinheit, insbesondere ein synchrones Betätigen der Zylinder der Stelleinheit die Referenzkante 7 auf die Messkante 3 bzw. die Messebene 3a bewegt, so dass die Referenzkante 7 an der Messkante 3 anliegt bzw. in der Messebene 3a liegt, entspricht der Abstand d dem zu messenden Anschlussmaß t. Die Bildauswerteeinheit ist dabei ausgebildet, sowohl das Anliegen der Referenzkante 7 an der Messkante 3 zu erfassen als auch den Abstand der Referenzkante 7 zu den Spitzen 5a, 5b zu ermitteln.

Wie aus Fig. 1, 1a und Fig. 2 ersichtlich, ist an einem der Teilkörper, nämlich dem zweiten Teilkörper 10, eine Maßverkörperung 12 vorgesehen, wobei die Maßverkörperung 12 als von der Referenzfläche 7 fort weisender Vorsprung mit einer definierten Erstreckung in Längsrichtung L des Kabels 2 ausgebildet ist. Die Maßverkörperung 12 ist als zylindrischer Zapfen ausgebildet, der sich von einer der Referenzfläche 7 gegenüberliegenden Fläche 21 (Fig. 1a) in Richtung zu den Spitzen 5a, 5b hin erstreckt. Die Maßverkörperung 12 weist sowohl in Längsrichtung L des Kabels 2 als auch quer zu der Längsrichtung L des Kabels 2 eine definierte Abmessung in beispielsweise Millimetern auf. Die Bildauswerteeinheit ist insbesondere auch ausgebildet, aus der bildlich erfassten Maßverkörperung das Anschlussmaß t unmittelbar in einer Längeneinheit, beispielsweise in Millimetern, zu ermitteln.

Anhand der vorstehend beschriebenen Vorrichtung 1 lässt sich eine beispielhafte Durchführung eines Verfahrens zur Messung des Anschlussmaßes t bei dem teilkonfektionierten Kabel 2 mit der Messkante 3 wie folgt beschreiben:
Der Verfahrensschritt S1 "Bereitstellen des teilkonfektionierten Kabels 2 mit der Messkante 3 in der Messvorrichtung 1, insbesondere in der Vorrichtung 1 aus Fig. 1, 1a und 2, wobei die Vorrichtung 1 den Referenzkörper 6 und eine Referenzfläche 7 aufweist" wird derart durchgeführt, dass das zwischen den kammartig ineinander greifenden Greiferbacken eines Greifers 22 erfasste teilkonfektionierte Kabel 2 in den Bereich zwischen den beiden, den Referenzkörper 6 bildenden Teilkörpern 8, 10 in einer längsgestrecken Ausrichtung so eingeführt wird, dass die Innenleiter-Kontaktteile 4a, 4b zwischen der Lichtquelle und der Bildaufnahmeeinheit der optischen Messeinheit angeordnet und im Wesentlichen freitragend gehalten sind. Weist das Kabel 2 zwei oder mehr Adern auf, sind die Innenleiter-Kontaktteile 4a, 4b parallel zueinander ausgerichtet in einer Ebene durch den Greifer 22 gehalten.

In dieser Ausgangsstellung weisen die aufeinander zu weisenden Enden der Teilkörper 8, 10 einen Abstand auf, so dass, abweichend von der Darstellung aus Fig. 2, die Konturen der Teilkörper 8, 10 das Kabel 2 in dem an die Messkante 3 angrenzenden Bereich mit Luft aufnehmen.

Der Verfahrensschritt S2 "Ausbilden des Referenzkörpers 6 durch ein Verschieben eines ersten Teilkörpers 8 mit einer ersten Teilfläche 9 und eines zweiten Teilkörpers 10 mit einer zweiten Teilfläche 11 derart, dass die beiden Teilflächen 9, 11 der Teilkörper 8, 10 eine im Wesentlichen durchgehende Fläche als Referenzfläche 7 ausbilden" wird in der beispielhaften Durchführung des Verfahrens derart durchgeführt, dass die Stelleinheit der Vorrichtung die beiden Teilkörper 8, 10 derart aufeinander zu bewegt, bis die Teilflächen 9, 11 die gemeinsame, bündige Fläche als Referenzfläche 7 ausbilden. Bei dieser beispielhaften Durchführung des Verfahrens weist die Referenzfläche 7 noch einen Abstand zu der Messkante 3 des Kabels 2 auf.

Eine bevorzugte Durchführung des Verfahrensschritts S2 sieht dabei vor, dass die beiden Teilkörper 8, 10 radial, bezogen auf die Längsrichtung L des Kabels 2, aufeinander zu bewegt werden, insbesondere aufeinander zu geschwenkt werden, um die Referenzfläche 7 auszubilden. Dabei können die Teilkörper 8, 10 insbesondere zeitgleich und synchronisiert um den gleichen Betrag, insbesondere um den gleichen Schwenkwinkel, aufeinander zu bewegt werden.

Der Zustand nach der Durchführung des Verfahrensschritts S2 und vor der Durchführung des Verfahrensschritts S3 ist in Fig. 1, 1a und 2 dargestellt.

Der Verfahrensschritt S3 "Verschieben der Referenzfläche 7 und der Messkante 3 relativ zueinander derart, dass in der Messstellung die Referenzfläche 7 an der Messkante 3 anliegt" wird in der beispielhaften Durchführung des Verfahrens derart durchgeführt, dass die Messkante 3 durch den Greifer 22 ortsfest gehalten wird und ausschließlich die Referenzfläche 7 der beiden aneinander anliegenden Teilkörper 8, 10 des Referenzkörpers 6 so lange bewegt wird, bis die Referenzfläche 7 an der Messkante 3 anliegt. Dieses Anliegen kann durch die optische Messeinheit erfasst werden. Das Verschieben der Referenzfläche 7 an die Messkante 3 wird so durchgeführt, dass die Zylindereinheiten des Greifers so betätigt werden, dass die Teilkörper 8, 10 an den Enden der Kolben 16, 17 in Pfeilrichtung 20 (Fig. 1a) entgegen der Richtung verfahren werden, aus der der Greifer 22 das Kabel 2 in dem ersten Verfahrensschritt S1 in die Vorrichtung zugeführt hat.

Bei einer bevorzugten Durchführung des Verfahrensschrittes S3 ist vorgesehen, dass die Referenzfläche 7 an der Messkante 3 mit einer vorgegebenen Kraft anliegt. Bei dem Anliegen der Referenzfläche 7 an der Messkante 3 wirken die geschlossenen Greiferbacken des Greifers 22 als Widerlager.

Die Verfahrensschritte S4 "Aufnehmen eines Bildes, das die Referenzfläche 7 und die Spitze 5a, 5b des Innenleiter-Kontaktteils 4a, 4b enthält" und S5 "Ermitteln des Anschlussmaßes t aus dem Bild durch eine Bildauswertung" schließen das Verfahren zur Messung des Anschlussmaßes t bei dem teilkonfektionierten Kabel 2 ab, wobei das teilkonfektionierte Kabel 2 eine Messkante 3 sowie ein Innenleiter-Kontaktteil 4a, 4b aufweist, wobei in einer Messstellung das Anschlussmaß t zwischen der Messkante 3 des Kabels 2 und der Spitze 5a, 5b des Innenleiter-Kontaktteils 4a, 4b in Längsrichtung L des Kabels 2 gemessen wird.

Bei dem vorstehend beschriebenen Ausführungsbeispiel ist die Stelleinheit als Greifereinheit mit zwei Greiferarmen ausgebildet, insbesondere als Winkelparallelgreifer, dessen Schwenkachse im Wesentlichen parallel zu der Längsrichtung L des Kabels 2 angeordnet ist. In einer Abwandlung des Ausführungsbeispiels ist die Stelleinheit als Greifereinheit mit zwei Greiferarmen ausgebildet, allerdings mit einer im Wesentlichen senkrechten Schwenkachse, die die Längsrichtung L des Kabels 2 schneidet.

Ist die Stelleinheit als Greifereinheit ausgebildet und ist der Schwenkwinkel bzw. der Öffnungswinkel zwischen den Greiferarmen gering, kann die Schwenkbewegung mindestens annähernd als lineare Bewegung angesehen werden, insbesondere, wenn der Schwenkradius groß ist.

In einer abgewandelten Ausführungsform ist die Stelleinheit als lineare Stelleinheit ausgebildet, wobei zu beiden Seiten des Kabels 2 zwei radial verschiebliche Schlitten vorgesehen sein können, die synchronisiert betätigt werden, und wobei auf jedem Schlitten einer der beiden Teilkörper 8, 10 angeordnet sind. Alternativ zu zwei linear verschieblichen Schlitten kann die lineare Stelleinheit auch zwei Linearmotoren umfassen, die zu beiden Seiten des Kabels 2 angeordnet sind und deren Abgangswellen jeweils radial ausgerichtet sind.

### BEZUGSZEICHENLISTE

- 1: Vorrichtung
- 2: Kabel
- 2a: auf den Kabelmantel des Kabels 2 umgelegtes Schirmgeflecht des Kabels 2
- 3: Messkante
- 3a: Messebene der Messkante 3 des Kabels 2
- 4a: erstes Innenleiter-Kontaktteil
- 4b: zweites Innenleiter-Kontaktteil
- 5a: Spitze des ersten Innenleiter-Kontaktteils 4a
- 5b: Spitze des zweiten Innenleiter-Kontaktteils 4b
- 6: Referenzkörper
- 7: Referenzfläche des Referenzkörpers 6
- 8: erster Teilkörper
- 9: erste Teilfläche
- 10: zweiter Teilkörper
- 11: zweite Teilfläche
- 12: Maßverkörperung
- 13: erster Ausleger
- 14: zweiter Ausleger
- 15: L-förmiges Koppelteil
- 16: Kolben eines ersten Zylinders
- 17: Kolben eines zweiten Zylinders
- 18: Umriss flächige Lichtquelle
- 19: Bereich der Bildaufnahmeeinheit
- 20: Pfeilrichtung
- 21: Fläche
- 22: Greifereinheit

- t: Anschlussmaß
- d: Abstand
- L: Längsrichtung des Kabels 2

## Patentansprüche

1. Vorrichtung (1) zur Messung eines Anschlussmaßes t bei einem teilkonfektionierten Kabel (2), wobei das teilkonfektionierte Kabel (2) eine Messkante (3) sowie ein Innenleiter-Kontaktteil (4a, 4b) aufweist, wobei in einer Messstellung das Anschlussmaß t zwischen der Messkante (3) des Kabels (2) und der Spitze (5a, 5b) des Innenleiter-Kontaktteils (4a, 4b) in Längsrichtung (L) des Kabels (2) gemessen wird, wobei die Vorrichtung (1) zur Messung des Anschlussmaßes t einen Referenzkörper (6) mit einer Referenzfläche (7) aufweist, wobei die Referenzfläche (7) an die Messkante (3) des Kabels (2) anlegbar ist,
wobei der Referenzkörper (6) einen ersten Teilkörper (8) mit einer ersten Teilfläche (9) und einen zweiten Teilkörper (10) mit einer zweiten Teilfläche (11) aufweist,
wobei die Vorrichtung eine Stelleinheit aufweist, die ausgebildet ist, den ersten Teilkörper (8) und den zweiten Teilkörper (10) im Wesentlichen quer zu der Längsrichtung (L) des Kabels (2) so aufeinander zu zu führen, dass in der Messstellung die erste Teilfläche (9) und die zweite Teilfläche (11) eine im Wesentlichen durchgehende Fläche als Referenzfläche (7) ausbilden,
wobei die Vorrichtung eine insbesondere optische Messeinheit umfasst, die ausgebildet ist, den Abstand von der Referenzfläche (7) zu der Spitze (5a, 5b) des Innenleiter-Kontaktteils (4a, 4b) zu ermitteln.

2. Vorrichtung nach Anspruch 1, wobei die Stelleinheit als Greifereinheit mit zwei Greiferarmen ausgebildet ist, wobei die Stelleinheit eine Steuereinheit aufweist, die die Greiferarme synchronisiert in die Messstellung verschwenken, und wobei an jedem der Greiferarme einer der Teilkörper (8, 10) angeordnet ist.

3. Vorrichtung nach Anspruch 2, wobei an dem jeweiligen Greiferarm je eine lineare Stellvorrichtung, insbesondere eine Zylindereinheit mit einem verschieblichen Kolben (16, 17), angeordnet ist, wobei der jeweilige Teilkörper (8, 10) an einem Ende des Kolbens (16, 17) angeordnet ist.

4. Vorrichtung nach Anspruch 3, wobei der jeweilige verschiebliche Kolben (16, 17) im Wesentlichen parallel zu der Längsrichtung (L) des Kabels (2) angeordnet ist, wobei der jeweilige Teilkörper (8, 10) quer zu der Längsrichtung des Zylinders an einem radial zu der Längsrichtung (L) des Kabels (2) weisenden Ausleger (13,14) angeordnet ist.

5. Vorrichtung nach Anspruch 4, wobei der Ausleger (13, 14) an einem ersten Ende an dem Kolben (16, 17) des Zylinders befestigt ist und wobei der Ausleger (13, 14) an einem zweiten Ende eine Kontur aufweist, die komplementär zu einem an die Messkante (3) des angrenzenden Abschnitt des Kabels (2) ausgebildet ist.

6. Vorrichtung nach einem der Ansprüche 2 bis 5, wobei die Schwenkachse im Wesentlichen parallel zu einer Längsrichtung (L) des Kabels (2) angeordnet ist.

7. Vorrichtung nach einem der Ansprüche 1 bis 6, wobei die optische Messeinheit eine Bildaufnahmeeinheit und eine Beleuchtungseinheit aufweist, wobei die Bildaufnahmeeinheit im Auflicht oder im Gegenlicht ein Bild aufnimmt, wobei die Messeinheit weiter eine Bildauswerteeinheit aufweist, wobei die Bildauswerteeinheit aus dem Bild das Anschlussmaß t ermittelt.

8. Vorrichtung nach einem der Ansprüche 1 bis 7, wobei an einem der Teilkörper (10) eine Maßverkörperung (12) vorgesehen ist, wobei die Maßverkörperung (12) insbesondere als von der Referenzfläche (7) fort weisender Vorsprung mit definierter Erstreckung in Längsrichtung (L) des Kabels (2) ausgebildet ist.

9. Verfahren zur Messung eines Anschlussmaßes t bei einem teilkonfektionierten Kabel, wobei das teilkonfektionierte Kabel eine Messkante sowie ein Innenleiter-Kontaktteil aufweist, wobei in einer Messstellung das Anschlussmaß t zwischen der Messkante des Kabels und der Spitze des Innenleiter-Kontaktteils in Längsrichtung des Kabels gemessen wird, wobei das Verfahren die Schritte umfasst:
S1: Bereitstellen des teilkonfektionierten Kabels (2) mit der Messkante (3) in einer Messvorrichtung (1), insbesondere in einer Vorrichtung (1) nach Anspruch 1, mit einem Referenzkörper (6) und einer Referenzfläche (7),
S2: Ausbilden des Referenzkörpers (6) durch ein Verschieben eines ersten Teilkörpers (8) mit einer ersten Teilfläche (9) und eines zweiten Teilkörpers (10) mit einer zweiten Teilfläche (11) derart, dass die beiden Teilflächen (9, 11) der Teilkörper (8, 10) eine im Wesentlichen durchgehende Fläche als Referenzfläche (7) ausbilden,
S3: Verschieben der Referenzfläche (7) und der Messkante (3) relativ zueinander derart, dass in der Messstellung die Referenzfläche (7) an der Messkante (3) anliegt,
S4: Aufnehmen eines Bildes, das die Referenzfläche (7) und die Spitze (5a, 5b) des Innenleiter-Kontaktteils (4a, 4b) enthält, und
S5: Ermitteln des Anschlussmaßes t aus dem Bild durch eine Bildauswertung.

10. Verfahren nach Anspruch 9, wobei der Verfahrensschritt S3 derart durchgeführt wird, dass die Referenzfläche (7) an der Messkante (3) mit einer vorgegebenen Kraft anliegt.

11. Verfahren nach Anspruch 9 oder 10, wobei der Verfahrensschritt S2 derart durchgeführt wird, dass die beiden Teilkörper (8, 10) radial aufeinander zu bewegt werden, insbesondere aufeinander zu geschwenkt werden, um die Referenzfläche (7) auszubilden.
